# EUROPEAN PATENT SPECIFICATION

(11) **EP 1 626 849 B1**
(45) Date of publication and mention of the grant of the patent: **10.01.2007**
(21) Application number: 04776012.9
(22) Date of filing: 14.05.2004
(51) Int. Cl.: B29C 33/60, B29C 33/64, C08L 83/04

(54) **MOLD RELEASE COMPOSITION AND PROCESS THEREWITH**
FORMTRENNMITTELZUSAMMENSETZUNG UND VERFAHREN DAMIT
COMPOSITION DE DEMOULAGE ET PROCEDE ASSOCIE

(30) Priority: 23.05.2003 US 444801
(43) Date of publication of application: 22.02.2006
(73) Proprietor: E.I. DUPONT DE NEMOURS AND COMPANY, Wilmington, Delaware 19898 (US)
(72) Inventor: MOFFETT, Robert, Harvey, Landenberg, Pennsylvania 19350 (US)
(74) Representative: Morf, Jan Stefan
(86) International application number: PCT/US2004/015266
(87) International publication number: WO 2004/106026

(56) References cited:
- US-A- 3 684 756
- US-A1- 2002 193 511
- US-B1- 6 403 163

## Description

### FIELD OF THE INVENTION

This invention relates to a process for applying a thin, continuous film coating of a composition that can be used as a mold release agent on a mold.

### BACKGROUND OF THE INVENTION

In commercial operations, mold release agent, generally a polymer or a combination of polymers, can be an emulsion or dispersion in a solvent. If dispersed in a solvent, the solvent is used as a vehicle to wet the surface of a shape-determining mold, onto which the release agent is applied. However, silicone resins, which are often used as release agents, often do not coat surfaces well when dispersed in a typical hydrocarbon solvent. The silicone resins, bead or puddle on the surface to which they have been applied, thus preventing a thin, continuous film from being achieved.

Therefore, there is an increasing need to develop a process for producing a release agent that can produce a thin, continuous film coating on the surface of a mold.

### SUMMARY OF THE INVENTION

The present invention provides a process for applying a thin, continuous film coating on or onto a mold, which comprises combining a solvent, a silicone resin, which is a polysilsesquioxane, and optionally a catalyst, a co-solvent, or both to produce a mold release composition; applying the mold release composition on or onto a mold, and optionally curing the composition in which the solvent has the formula R(R₂SiO)ₓSiR₃ or (R₂SiO)_{y} where each R is a methyl group or a methyl group substituted with a functional group, x is 1 to 20, and y is 3 to 20.

### DETAILED DESCRIPTION OF THE INVENTION

According to the invention, the term "mold" means one or more shape-determining surfaces.

The process for applying a thin, continuous film coating on or onto a mold according to the invention comprises (1) combining a solvent, a silicone resin, which is a polysilsesquioxane, and optionally a co-solvent, a catalyst, or both to produce a mold release composition, (2) applying the mold release composition on or onto a mold and optionally (3) curing the release composition.

The solvent used in the process according to the invention has the formula R(R₂SiO)ₓSiR₃ or (R₂SiO)_{y} where each R can be the same or different and is a methyl group or a methyl group substituted with a functional group. The functional group can be a halogen, an amine, or any other functional group. Subscript x is a number from 1 to about 20, preferably 1 to 10. Subscript y is a number from 3 to about 20, preferably 3 to about 10. A preferred solvent has a molecular weight in the range between about 50 and about 1,000 and a boiling point less than about 300°C, preferably lower than 250°C, more preferably lower than 200°C, and most preferably lower than 150°C.

Examples of suitable methyl siloxanes include, but are not limited to, hexamethyldisiloxane, hexamethylcyclotrisiloxane, 2,5-dichloro-1,1,3,3,5,5,-hexamethyltrisiloxane, 1,3-dimethyltetramethoxydisiloxane, 1,1,1,3,5,5,5,-heptamethyltrisiloxane, 3-(heptafluoropropyl)trimethysiloxane, octamethyltrisiloxane, octamethyltetrasiloxane, octamethylcyclotetrasiloxane, decamethyltetrasiloxane, decamethylcyclopentasiloxane, dodecamethylpentasiloxane, and dodecamethylcyclohexasiloxane, and combinations of two or more thereof.

The silicone resin used in the process according to the invention is a polysilsesquioxane that is compatible with the solvent disclosed above. For example, methoxy-terminated polysilsesquioxanes and hydroxy-terminated polysilsesquioxanes can be used. In particular, combinations of polysilsesquioxanes with other polyorganosiloxanes, including polydimethylsiloxanes, polymethylhydrogensiloxanes, polytrimethylsiloxanes and polydimethylcyclosiloxanes, can be used in the inventive process. The silicone resin can also contain functional groups such as halide, amine, hydroxy, epoxy, carbinol, carboxylate, acetoxy, alkoxy, acrylate, and combinations of two or more thereof. The molecular weight can be in the range of from about 500 to about 1,000,000.

The above-disclosed siloxanes and silicone resins are generally available commercially, for example, from Dow Corning Chemicals, Midland, Michigan, and General Electric, Fairfield, Connecticut.

Any organic solvent, preferably substantially free of water such as, for example, a hydrocarbon or halogenated hydrocarbon, that is inert towards other components of the composition, is compatible with the volatile siloxane and is volatile to evaporate rapidly when applied to the mold surface can be used as co-solvent. A co-solvent can also reduce the viscosity of the composition and promote the release of a polymer from a mold. Preferably, a co-solvent has a normal boiling point below about 300°C, preferably below 200°C, and most preferably below 150°C, depending on the temperature of the mold release composition to be applied to a mold. The lower the temperature the mold release composition to be allied, the lower the boiling point solvent is preferred and vice versa. Examples of suitable co-solvents include, but are not limited to, octane, decane, cyclohexane, toluene, xylene, methylene chloride, methylene dichloride, ethylene dichloride, carbon tetrachloride, chloroform, perchloroethylene, acetone, methylethyl ketone, ethyl acetate, tetrahydrofuran, dioxane, white spirit, mineral spirits, naphtha, and combinations of two or more thereof.

The mold release composition can also comprise additional silicone compound such as modified fumed silica, surfactants, fluoropolymers such as polytetrafluoroethylene, waxes, fatty acids such as stearic acid, fatty acid salts such as metal stearates, finely dispersed solids such as talc, emulsifiers, biocides, corrosion inhibitors.

Each component disclosed above can be present in the composition in an effective amount sufficient to effect the suitable release of a molded article. For example, based on the total weight of the composition, the solvent can be present in the composition in the range of from about 10 to about 99%; a silicone resin can be present in the composition in the range of from about 0.1 to about 90%. A co-solvent, if used, can be present in the composition in such range that the sum of solvent and co-solvent is about 10 to about 99%, provided that the solvent is present at least about 10 %, preferably at least 20%. Other components, if present, can be in the range of from about 0.01 to about 10%.

Any catalyst that can catalyze or enhance the curing of a composition comprising a volatile siloxane, a silicone resin, and a solvent can be used herein. A preferred catalyst is an organic titanium compound. Titanium tetrahydrocarbyloxides, also referred to as tetraalkyl titanates herein, are most preferred organic titanium compounds because they are readily available and effective. Examples of suitable titanium compounds include those expressed by the formula Ti(OR)₄ where each R is individually selected from an alkyl, cycloalkyl, alkaryl, hydrocarbyl radical containing from 1 to about 30, preferably 2 to about 18, and most preferably 2 to 12 carbon atoms per radical and each R can be the same or different. Titanium tetrahydrocarbyloxides in which the hydrocarboxyl group contains from 2 to about 12 carbon atoms per radical which is a linear or branched alkyl radical are most preferred because they are relatively inexpensive, more readily available, and effective in curing the composition. Suitable titanium compounds include, but are not limited to, titanium tetraethoxide, titanium tetrapropoxide, titanium tetraisopropoxide, titanium tetra-n-butoxide, titanium tetrahexoxide, titanium tetra 2-ethylhexoxide, titanium tetraoctoxide, and combinations of two or more thereof

Other suitable catalysts include a compound or element of VIII group of the periodic table of the elements such as platinum, palladium, iron, zinc, rhodium, and nickel as well as a tin or zirconium compound. Examples of other suitable catalysts include, but are not limited to, dibutyltin diacetate, dibutyl dilaurate, zinc acetate, zinc octoate, zirconium octoate, and combinations of two or more thereof. For example, dibutyltin diacetate, can be used independently or in combination with a titanium compound.

These catalysts are believed commercially available. For examples, TYZOR^{®} TPT and TYZOR^{®} TBT (tetra isopropyl titanate and tetra n-butyl titanate, respectively) available from E. I. du Pont de Nemours and Company, Wilmington, Delaware, U.S.A.

Each of the catalysts disclosed above can be used in the composition in the range of from about 0.01 to about 10 weight % relative to the silicone polymers.

The composition can be produced by any means known to one skilled in the art such as, for example, mixing each component disclosed above. It is preferred that the catalyst be introduced after the silicone resin, solvent, and the optional co-solvent are combined. Application of the mold release composition can be carried out by any means known to one skilled in the art such as, for example, spraying, brushing, wiping, dipping, and combinations of two or more thereof. Any surface of a shape-determining mold can be applied with the release composition. Curing can be carried out by any means known to one skilled in the art such as curing at ambient temperature such as from about 25°C to about 200°C under a pressure that accommodates the temperature range such as, for example, atmospheric pressure for about one second to about 2 hours. Generally, curing is carried out at the temperature and pressure at which the molding is being carried out.

For producing a molded article, a molding material or a material to be molded can be introduced into or onto the mold by any means known to one skilled in the art such as, for example, pumping, extruding, blending, or other suitable means known to one skilled in the art. Thereafter, a molded article is produced, which can be removed or released from the mold by any means known to one skilled in the art. Because the means for making a molded article is well known in the art, the description of which is omitted herein for the interest of brevity.

The molding material can be any material that can be molded including, but not limited to, plastics, polymers, glass, ceramics, and metals. Examples of polymers include a thermosetting resin or a thermoplastic resin. Specific examples include acrylonitrile-butadiene-styrene, acrylonitrile-chlorinated polyethylene-styrene, acrylic-styrene-acrylonitrile, polyacetal homopolymers and copolymers, acrylics, cellulosics, fluoropolymers, polyamides, polyacrylates, polybutylene, polycarbonates, polyesters, polyethylenes, ethylene acid copolymers, ethylene-ethyl acrylates, ethylene-methyl acrylates, polymethyl acrylate, polymethyl methacrylate, polybutyl methacrylate, ethylene-vinyl acetates, ethylene vinyl alcohol copolymers, ionomers, polymethylpentene, polyphenylene oxides, polypropylene, ethylene-propylene copolymers, polypropylene impact copolymers, polypropylene random copolymers, polystyrenes, styrene-acrylonitrile, styrene-butadiene copolymers, styrene-ethylene/butylene-styrene, styrene-maleic anhydride copolymers, polyvinyl chloride, polyvinyl chloride, vinylidene chloride homopolymers and copolymers, styrenic block copolymers, polyolefin blends, elastomeric alloys, thermoplastic urethanes, polyethylene terephthalate, polybutylene terephthalate, thermoplastic copolyesters, polyethers, thermoplastic polyamides, polyether-polyamide block copolymers, allyl molding compounds, bis-maleimides, epoxy resins, phenolic resins, polyesters, ethylene-propylene diene terpolymers such as EPDM rubber, polyimides, ionomers, polyurethanes, segmented polyurea/urethanes, reaction injection molded polyurethanes, silicones, urea-melamine formaldehyde resins, polyacetals, polyesters, polyamides, ionomers, and combinations of two or more thereof. These polymers are well known to one skilled in the art.

### EXAMPLES

The following examples are illustrative of the invention and should not be construed as to unduly limit the scope of the invention.

### Example 1. This example demonstrates that thinner continuous silicone resin coatings can be produced when using a volatile methylsiloxane than when using petroleum ether.

A release agent composition comprising 80% solvent (either petroleum ether or octamethylcyclotetrasiloxane (volatile methyl)), 20% silicone resins and fluids, and about 0.2% of catalyst (based on total weight of solvent and resin and fluid; TYZOR^{®} TBT and dibutlytin diacetate) were sprayed onto pre-weighed 1 inch by 3 inch (2.54 cm by 7.62 cm) glass microscope slides heated to 65°C with quantity shown in the table below. After allowing the solvent sufficient time to evaporate in a hood, the release agent was cured for 2 minutes at 65°C. The slides were then re-weighed and visually examined under a microscope to estimate the coverage of the slide's surface with silicone resin. The results are shown in Table 1.

**Table 1**

| Coating Wt (mg) | Petroleum Ether | Methyl Siloxane |
|---|---|---|
| 0.7 | | 100% coverage |
| 0.9 | 20% coverage | |
| 1.9 | 40% | |
| 2.8 | 65% | 100% |
| 3.1 1 | 70% | |
| 3.5 | | 100% |
| 8.4 | 95% . | |
| 19.4 | 98% | |
| 38.2 | 100% | |

The coating was very irregular and bumpy on the slides coated using petroleum ether as the solvent. The coating using methyl siloxane as the solvent was very smooth. Replacing the petroleum ether with mineral spirits aggravated the beading of the silicone resins on the glass surface.

### Example 2. This example serves to demonstrate how the use of various volatile methyl siloxane solvents promote the formation of smooth, continuous coatings of various silicone resins, fluids and functional fluids applied at elevated temperature.

Silicone resins, fluids and functional fluids were dispersed in various hydrocarbon solvents and volatile methyl siloxanes at a concentration of 5 wt % polymer solids and 95 wt % solvent. The silicone polymers and solvent were sprayed, using a Preval aerosol sprayer, onto pre-weighed, 1" x 3" (2.54 cm x 7.62 cm) glass microscope slides heated to 65C. After the solvent evaporated, the slides were re-weighed to determine coating weight and visually examined for the smoothness and coverage of the coating, as shown in Table 2.

**Table 2**

| | | Coating | | | | | Coating | | |
|---|---|---|---|---|---|---|---|---|---|
| SP¹ | Solvent² | Wt (mg) | Description | Coverage | SP¹ | Solvent² | Wt (mg) | Description | Coverage |
| A | Toluene | 1.8 | spotty | incomplete | A | OMS | 0.8 | smooth | complete |
| B | PE | 2.7 | rough | incomplete | B | DMS | 4.1 | smooth | complete |
| B | MS | 1.6 | beaded | incomplete | B | -- | | | |
| B | acetone | 3.0 | rough | incomplete | B | - | | | |
| C | MS | 3.3 | beaded | incomplete | C | OMS | 2.6 | smooth | complete |
| C | | | | | C | DMS | 3.2 | smooth | complete |
| D | S | 1.2- | beaded | incomplete | D | OMS | 1.7 | smooth | complete. |
| D | | | | | D | OMTS | 3.5 | smooth | complete |

| | | | | | | | | | |
|---|---|---|---|---|---|---|---|---|---|
| ¹SP denotes silicone polymer Polymer A is Hydroxy terminated, methyl silsesquioxane-dimethyl siloxane copolymer; polymer B is Methoxy terminated, methyl silsesquioxane-dimethyl siloxane copolymer; polymer C is 14,000 CSt (centiStoke) hydroxy terminated polydimethyl siloxane; and polymer D is 60,000 CSt polydimethyl siloxane. ² PE is petroleum ether, MS is mineral spirits; S is Stoddard solvent; OMS denotes octamethylcyclotetrasiloxane; DMS is decamethyltetrasiloxane; and OMTS is octamethyltrisiloxane. | | | | | | | | | |

Results show the silicone polymers dispersed in VMS fluids produced smooth, continuous films whereas the same silicone polymers dispersed in hydrocarbon solvents produced rough, incomplete films.

### Reference Example 3. This example demonstrates how the use of volatile methyl siloxane solvents promote the formation of smooth, continuous coatings of silicone polymers when applied at ambient temperature.

A sample of a silicone gum was dispersed in petroleum ether while a second sample of the same silicone gum was dispersed in VMS fluids at a concentration of 5 wt % polymer solids and 95 weight % solvent. The silicone polymer and solvent were sprayed, using a Preval aerosol sprayer, onto pre-weighed, 1" x 3" (2.54 cm x 7.62 cm) glass microscope slides at ambient temperature. After the solvent evaporated, the slides were re-weighed to determine coating weight and visually examined for the smoothness and coverage of the coating as shown in Table 3.

**Table 3**

| | | Coating | | | | | Coating | | |
|---|---|---|---|---|---|---|---|---|---|
| SP¹ | Solvent² | Wt (mg) | Description (mg) | Coverage | SP¹ | Solvent² | Wt | Description | Coverage |
| D | PE | 4.1 | rough | incomplete | D | 75/25 wt % OMS/OMTS | 2.5 | smooth | complete |

| | | | | | | | | | |
|---|---|---|---|---|---|---|---|---|---|
| ¹ SP denotes silicone polymer; Polymer D is 60,000 CSt polydimethyl siloxane. ² PE is petroleum ether, OMS denotes hexamethyldisiloxane and OMTS is octamethyltrisiloxane. | | | | | | | | | |

Results show the silicone polymers dispersed in VMS fluids produced a smooth, continuous film whereas the same silicone polymers dispersed in a hydrocarbon solvent produced rough, incomplete film when applied at ambient temperature.

### Reference Example 4. This example serves to demonstrate how the use of a volatile methyl siloxane can promote the formation of a smooth, thin coating of a fully formulated silicone release agent.

A commercial release agent for plastics, adhesives and elastomeric products was purchased. The manufacturer describes the product as having a 50% active material content comprising trimethylated silica and tetra(trimethylsiloxy) silane and utilizing a hydrocarbon solvent mixture composed of Stoddard solvent, xylene and ethylbenzene. The manufacturer's brochure recommends diluting 10 parts of the release agent with 80 parts isopropanol and 10 parts toluene to improve surface wetting. Following the manufacturer's recommendation, the release coating was diluted to 5 wt % polymer solids utilizing an 10/80/10 wt % mixture of release agent, isopropanol and toluene. The release coating was then applied using a Preval aerosol sprayer, onto pre-weighed, 1" x 3" (2,54 cm x 7.62 cm) glass microscope slides heated to 65C. After the solvent evaporated, the slides were re-weighed to determine coating weight and visually examined for the smoothness and coverage of the coating. As a comparison, the release agent was diluted in octamethyltrisiloxane (OMTS), again to 5 weight % polymer solids and applied to a glass slide using the described manner. The results showed that manufacturer's recommended hydrocarbon solvent produced a spotty, incomplete coating whereas the use of the VMS solvent produced a smooth, continuous coating. The results are shown in Table 4 where IPA is isopropyl alcohol.

**Table 4**

| | Coating | | | | Coating | | |
|---|---|---|---|---|---|---|---|
| Solvent | Wt (mg) | Description | Coverage | solvent | Wt (mg) | Description | Coverage |
| 80/10 IPA/Toluene | 3.0 | spotty | incomplete | OMTS | 3.3 | smooth | complete |

### Example 5. This example serves to demonstrate how formation of a smooth, continuous coating improves the performance of a release agent.

A release coating utilizing a methyl silsesquioxane-dimethyl siloxane copolymer and a polydimethyl siloxane fluid were dispersed in a various solvents at a solids concentration of 5 weight %. The coating was applied using a Preval aerosol sprayer to a pre-weighed 9" x 12" x 3" (22.86 cm x 30.48 cm x 7.62 cm) aluminum box mold heated to 65C. After the solvent had evaporated, the mold was cooled to room temperature and re-weighed. The mold was then reheated and filled with toluene diisocyanate based polyurethane flexible foam resin. The mold lid was secured and the expanding foam was allowed to cure for 6 minutes while being maintained at 65C in an oven. The foam was then removed from the mold by hand. If the foam was successfully removed from the mold without tearing, the mold was refilled with polyurethane resin again without recoating the mold with release agent. This cycle was repeated until tearing of the foam was observed. The results are shown in Table 5 where the abbreviations are the same as those in Table 1.

**Table 5**

| Solvent¹ | Weight of Cured Coating | Number of Releases Before Tearing of Foam |
|---|---|---|
| OMS | 0.12g | 14 |
| 50/50 wt % mix OMTS/DMS | 0.12 g | 10 |
| 10/20/10/60 wt % mix, 244/1.0/1.5/75 OMS/OMTS/DMS/MS | 0.14 g | 12 |
| mineral spirits | 0.13 g | 1 |

| | | |
|---|---|---|
| ¹ See previous tables for solvent abbreviations. | | |

The results show that a release coating dispersed in a VMS fluid or a combination of VMS and hydrocarbon solvent provide significantly improved performance compared to using a hydrocarbon solvent alone.

## Claims

1. A process comprising combining a solvent, a silicone resin, which is a polysilsesquioxane, and optionally a catalyst, a co-solvent, or both to produce a mold release composition; applying said composition into or onto a mold, and optionally curing said composition wherein said solvent has the formula R (R₂SiO)ₓSiR₃ or (R₂SiO)_{y} where each R is a methyl group or a methyl group substituted with a functional group, x is 1 to 20, and y is 3 to 20.

2. A process according to claim 1 further comprising curing said composition.

3. A process according to claim 1 wherein said composition comprises said catalyst, said co-solvent, or both.

4. A process according to claim 1, 2, or 3 wherein said solvent is hexamethyldisiloxane, hexamethylcyclotrisiloxane, 2,5-dichloro-1,1,3,3,5,5,-hexamethyltrisiloxane, 1,3-dimethyltetramethoxydisiloxane, 1,1,1,3,5,5,5,-heptamethyltrisiloxane, 3-(heptafluoropropyl)trimethysiloxane, octamethyltrisiloxane, octamethylcyclotetrasiloxane, decamethyltetrasiloxane, decamethylcyclopentasiloxane, dodecamethylpentasiloxane, dodecamethylcyclohexasiloxane, or combinations of two or more thereof.

5. A process according to claim 4 wherein said solvent is octamethyltrisiloxane, octamethylcyclotetrasiloxane, decamethyltetrasiloxane, or combinations of two or more thereof.

6. A process according to claim 3 wherein said composition comprises said catalyst and wherein said catalyst is a titanium compound, dibutyltin diacetate, or combinations thereof.

7. A process according to claim 1 further comprising modified fumed silica, a surfactant, a fluoropolymer, a wax, a fatty acid, a fatty acid salt, a finely dispersed solid, an emulsifier, a biocide, a corrosion inhibitor, or combinations of two or more thereof.

8. A process according to any of claims 1 to 7 further comprising introducing a molding material into or onto said mold, converting said material into a molded article, and recovering said article.

9. A shape-determining mold having applied on a surface thereof a release composition comprising a solvent, a silicone resin, which is a a polysilsesquioxane, and optionally a catalyst, a co-solvent, or both wherein said solvent has the formula R(R₂SiO)ₓSiR₃ or (R₂SiO)_{y} where each R is a methyl group or a methyl group substituted with a functional group, x is 1 to 20, and y is 3 to 20.

## Patentansprüche

1. Verfahren, umfassend das Vereinigen eines Lösungsmittels, eines Siliconharzes, bei welchem es sich um ein Polysilsesquioxan handelt, und wahlweise eines Katalysators, eines Co-Lösungsmittels oder von beidem, zur Herstellung einer Formtrennmittelzusammensetzung; Aufbringen der Zusammensetzung in oder auf eine Form und wahlweise Aushärten der Zusammensetzung, wobei das Lösungsmittel die Formel R(R₂SiO)ₓSiR₃ oder (R₂SiO)_{y} aufweist, wobei jedes R eine Methylgruppe oder eine mit einer funktionellen Gruppe substituierte Methylgruppe ist, x 1 bis 20 ist und y 3 bis 20 ist.

2. Verfahren nach Anspruch 1, ferner umfassend das Aushärten der Zusammensetzung.

3. Verfahren nach Anspruch 1, wobei die Zusammensetzung den Katalysator, das Co-Lösungsmittel oder beides umfasst.

4. Verfahren nach Anspruch 1 2 oder 3, wobei das Lösungsmittel Hexamethyldisiloxan, Hexamethylcyclotrisiloxan, 2,5-Dichlor-1,1,3,3,5,5,-hexamethyltrisiloxan, 1,3-Dimethyltetramethoxydisiloxan, 1,1,1,3,5,5,5-Heptamethyltrisiloxan, 3-(Heptafluorpropyl)trimethylsiloxan, Octamethyltrisiloxan, Octamethylcyclotetrasiloxan, Decamethyltetrasiloxan, Decamethylcyclopentasiloxan, Dodecamethylpentasiloxan, Dodecamethylcyclohexasiloxan oder Kombinationen von zwei oder mehreren davon ist.

5. Verfahren nach Anspruch 4, wobei das Lösungsmittel Octamethyltrisiloxan, Octamethylcyclotetrasiloxan, Decamethyltetrasiloxan oder Kombinationen von zwei oder mehreren davon ist.

6. Verfahren nach Anspruch 3, wobei die Zusammensetzung den Katalysator umfasst und wobei der Katalysator eine Titanverbindung, Dibutylzinndiacetat oder Kombinationen davon ist.

7. Verfahren nach Anspruch 1, ferner umfassend modifizierten Quarzstaub, ein oberflächenaktives Mittel, ein Fluorpolymer, ein Wachs, eine Fettsäure, ein Fettsäuresalz, einen fein verteilten Feststoff, einen Emulgator, ein Biozid, einen Korrosionshemmer oder Kombinationen von zwei oder mehreren davon.

8. Verfahren nach einem der Ansprüche 1 bis 7, ferner umfassend das Einbringen eines Formungsmaterials in oder auf die Form, Umwandeln des Materials zu einem Formgegenstand und Gewinnen des Gegenstands.

9. Gestaltfestlegende Form, die auf einer Oberfläche davon eine Trennmittelzusammensetzung aufweist, die ein Lösungsmittel, ein Siliconharz, bei welchem es sich um ein Polysilsesquioxan handelt, und wahlweise einen Katalysator, ein co-Lösungsmittel oder beides umfasst, wobei das Lösungsmittel die Formel R(R₂SiO)ₓSiR₃ oder (R₂SiO)_{y} aufweist, wobei jedes R eine Methylgruppe oder eine mit einer funktionellen Gruppe substituierte Methylgruppe ist, x 1 bis 20 ist und y 3 bis 20 ist.

## Revendications

1. Procédé qui comprend la combinaison d'un solvant, d'une résine silicone qui est un polysilsesquioxane et éventuellement d'un catalyseur, d'un co-solvant ou des deux pour produire une composition de démoulage, l'application de ladite composition dans ou sur un moule et, en option, la cuisson de ladite composition, ledit solvant répondant à la formule R(R₂SiO)ₓSiR₃ ou (R₂SiO)_{y} où chaque R représente un groupement méthyle ou un groupement méthyle substitué par un groupement fonctionnel, x est compris entre 1 et 20 et y est compris entre 3 et 20.

2. Procédé selon la revendication 1, qui comprend également la cuisson de ladite composition.

3. Procédé selon la revendication 1, où ladite composition comprend ledit catalyseur, ledit co-solvant ou les deux.

4. Procédé selon la revendication 1, 2 ou 3, où ledit solvant est l'hexaméthyldisiloxane, l'hexaméthylcyclotrisiloxane, le 2,5-dichloro-1,1,3,3,5,5-hexaméthyltrisiloxane, le 1,3-diméthyltétraméthoxydisiloxane, le 1,1,1,3,5,5,5-heptaméthyltrisiloxane, le 3-(heptafluoropropyl)triméthylsiloxane, l'octaméthyltrisiloxane, l'octaméthylcyclotétrasiloxane, le décaméthyltétrasiloxane, le décaméthylcyclopentasiloxane, le dodécaméthylpentasiloxane, le dodécaméthylcyclohexasiloxane ou des combinaisons de deux ou plusieurs de ceux-ci.

5. Procédé selon la revendication 4, où ledit solvant est l'octaméthyltrisiloxane, l'octaméthylcyclotétrasiloxane, le décaméthyltétrasiloxane ou des combinaisons de deux ou plusieurs de ceux-ci.

6. Procédé selon la revendication 3, où ladite composition comprend ledit catalyseur et où ledit catalyseur est un composé de titane, le diacétate de dibutylétain ou des combinaisons de ceux-ci.

7. Procédé selon la revendication 1, qui utilise également une silice de pyrohydrolyse modifiée, un surfactant, un fluoropolymère, une cire, un acide gras, un sel d'acide gras, un solide finement dispersé, un émulsionnant, un biocide, un inhibiteur de corrosion ou des combinaisons de deux ou plusieurs de ceux-ci.

8. Procédé selon l'une quelconque des revendications 1 à 7, qui fait également intervenir l'introduction d'un matériau à mouler dans ou sur ledit moule, la transformation dudit matériau en un article moulé et la récupération dudit article.

9. Moule de mise en forme sur une surface duquel est appliquée une composition de démoulage qui comprend un solvant, une résine silicone qui est un polysilsesquioxane et éventuellement un catalyseur, un co-solvant ou les deux, ledit solvant répondant à la formule R(R₂SiO)ₓSiR₃ ou (R₂SiO)_{y} où chaque R représente un groupement méthyle ou un groupement méthyle substitué par un groupement fonctionnel, x est compris entre 1 et 20 et y est compris entre 3 et 20.
